(19) Europäisches Patentamt

European Patent Office

Office européen des brevets

(11) **EP 1 100 260 A1**

(12) **EUROPEAN PATENT APPLICATION**

(43) Date of publication:
**16.05.2001  Bulletin 2001/20**

(51) Int. Cl.⁷: $H04N\ 5/21$, $H04N\ 7/26$

(21) Application number: **99830705.2**

(22) Date of filing: **12.11.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**STMicroelectronics S.r.l.**
**20041 Agrate Brianza MI (IT)**

(72) Inventors:
• **Borneo, Antonio Maria**
  **75100 Matera (IT)**
• **Salinari, Lanfranco**
  **74011 Castellaneta (IT)**

(74) Representative:
**Pellegri, Alberto et al**
**c/o Società Italiana Brevetti S.p.A.**
**Piazza Repubblica, 5**
**21100 Varese (IT)**

(54)    **Spatio-temporal filtering method for noise reduction during pre-processing of picture sequences in video encoders**

(57)    A method of filtering noise of digital pictures comprises selecting a first set of pixels (WORKING_WINDOW) constituted by the union of a pixel of the current picture to be filtered (P) and of a second set of pixels temporally and spatially near (PIXEL_NEAR) to said pixel, calculating a certain number (N) of extended sums ($SUMk_j$) of values assumed by as many pre-established weight functions of the intensity of a selected video component ($k_j$) on the first set of pixels (WORKING_WINDOW). The pixels of the second set of pixels near (PIXEL_NEAR) can belong to the current picture or to a preceding picture.

Several noise filters for digital pictures implementing the method of the invention are also presented.

FIG. 2

EP 1 100 260 A1

**Description**

FIELD OF THE INVENTION

The present invention generally relates to the video image processing and in particular to techniques for filtering the noise of digital video pictures.

BACKGROUND OF THE INVENTION

The present invention is useful for filtering digital video sequences corrupted by high noise levels.

Because of the particular importance of the MPEG standard in treating digitized video sequences, to illustrate an implementation of the method here proposed, reference will be made to an MPEG2 system, though the method of the invention remains perfectly usable even in systems for transferring video sequences based on different standards, as established from time to time.

The main application of the invention is picture pre-processing before the MPEG2 or other standard coding, but it is possible to exploit the invention even outside a coding process, for example in a TV set for filtering the pictures to be displayed upon reception.

The pre-processing of pictures to be coded according to the MPEG2 standard is an operation that affords a great enhancement of the coding efficiency.[1] [2]

Many filtering techniques of pictures have been developed.[3]

In the majority of cases a burdensome aspect of those techniques is a high calculation power requisite, or of several iterations on the same picture. As a consequence, they are either too expensive or hardly implementable for real-time video applications.

The real-time video filtering techniques so far realized[4] base the filtering operations on the separation distances among the unfiltered grey level of the pixel to be filtered ($P_0$) and the grey levels of other pixels of a working window. The effectiveness of the filtering is in this case inversely proportional to such a distance. As a consequence the pixels for which such a distance is large are not involved in the filtering operations.

This is a coarse method of segmenting the picture that avoid the calculation of the average of pixels belonging to different objects, operation that would cause an out of focus of the picture and, in the case of a temporal filter, also the appearance of "trails".

The document WO 97/30545 discloses a motion-compensated recursive filter based on the above method. Such a filter, depending on the absolute value of the difference between the current pixel and the corresponding pixel in the preceding picture, establishes the value of a coefficient $\beta$, and combines a fraction $\beta$ of the current pixel with a fraction $1-\beta$ of the corresponding pixel in the preceding motion-compensated picture. Such a system is substantially an IIR adaptive filter of the first order.

Such a technique has the drawback of leaving unchanged the current pixel if it is too much different from the corresponding pixel of the preceding picture, even if such difference could be due to noise.

The document EP 0 878 776 A1 discloses a spatial adaptive low pass filter, whose adapting mechanism is based on the calculation of the difference among $P_0$ and the other pixels of the working window. A local evaluation of certain parameters of the picture is carried out (for example, whether the considered pixel belongs to an uniform zone or not) and on that base it is decided whether the pixel to be filtered is near to or far from the other pixels, by way of a frizzy logic process.

Near pixels are given more weight than far pixels in the calculation of the value of the filtered pixel.

Even in this case the effectiveness in presence of high noise levels is not high, because the control that is made to assess whether the considered pixel belongs to an uniform zone (and so if it is possible to filter more) or not is based on distances among P and the surrounding pixels.

In the article "A method of noise reduction on image processing", IEEE Transactions on Consumer Electronics, Vol. 39, N. 4, Nov. 1993, S. Inamori et al., a temporal filter is described, based on the one described by Dubois and Sabri[4], but more sophisticated, wherein the input-output characteristic is adaptively chosen in function of the expected power of the noise. The filter is turned-off by signals coming from a motion detection section, to avoid the generation of

[1] A.van der Werf et al., "I.McIC: a single-chip MPEG-2 video encoder for storage", IEEE Journal of Solid-State Circuits, Vol.32, n. 11, Nov.1997.

[2] L.Yan, "Noise reduction for MPEG type of codec", Proc. IEEE Int. Conf Acoust., Speech, Signal Process., 1994.

[3] J.C.Brailean, R.P.Kleihorst, S.Efstratiadis, A.K.Katsaggelos and R.L.Lagendijk, "Noise reduction filters for dynamic image sequences: a review", Proc. IEEE, vol.83, pp-1270-1292, Sept.1996.

[4] E.Dubois and S.Sabri, "Noise reduction in image sequences using motion-compensated temporal filtering", IEEE Trans. on Communications, vol. COM-32, pp.826-831, July 1984.

trails, and by an edge detection block to prevent causing an out of focus of the picture.

Even this filter has the same drawbacks of the previously mentioned types of filters and must be turned off in presence of noise peaks.

These known techniques become unsatisfactory in presence of high noise levels. It becomes necessary to turn off the filter every time a noise peak ("spike") is superimposed to the pixel $P_0$ being processed. High noise peaks are noise samples of value much higher than other samples. These noise peaks have a rather small probability but not null, because the queues of the stochastic distribution of many kind of noise (e.g. gaussian noise) are theoretically infinite.

In such cases, the above mentioned known filters, always interpret higher than normal differences among the current pixel and the neighbouring pixels as if the picture is not stationary and never as if the picture be corrupted by noise. Therefore, the performance of noise reduction of the filters is sensibly limited.

A well known technique for selecting the pixels of the working window is the so called "Duncan Range Test" (DRT)[5], that has been used with good results[6]. In order to highlight the characteristics of the DRT, a brief description follows.

Let us suppose to have a set of data, for example the luminance values of the pixels to be filtered, organized in an increasing order:

$$g_{(1)} \leq g_{(2)} \leq ... \leq g_{(n)}$$

where the number in parenthesis indicates the position assumed in the ordered set.

The DRT is based on the definition of a set of "similar" values, meaning that two values are considered "similar" if:

$$\frac{|g_{(i)} - g_{(j)}|}{\sigma_n} \leq \rho_{|i-j|,\alpha}$$

where

- $\sigma_n$ is the standard deviation of the superimposed noise, that is considered known;

- $\rho_{|i-j|,\alpha}$ is a value that depends by the precision level $\alpha$ of the test, by the number $|i-j|$ of data, that in the specific case is a number of pixels comprised between $g_{(i)}$ e $g_{(j)}$, and by the stochastic distribution of the noise. $\alpha$ represents the probability of taking a wrong decision: obviously the smaller is $\alpha$, the smaller is $\rho$, and so the more restrictive the test is.

With these premises, the object of the DRT is to find the sub-set *containing the current pixel $P_0$ and including the greatest number of "similar" pixels.*

In other words it must be determined the sub-set of pixel:

$$g_{(i)},...,P_0,...,g_{(j)}$$

where *i* and *j* are such that:

$$j - i = \underset{i',j'}{MAX}(j'-i') \text{ where } j' \text{ and } i' \text{ satisfy the conditions } \begin{cases} \dfrac{|g_{(i)} - g_{(j)}|}{\sigma_n} \leq \rho_{|i-j|,\alpha} \\ g_{(i')} \leq P_0 \leq g_{(j')} \end{cases}$$

The successive filtering operations are performed only on the pixels belonging to the selected range. Notably the DRT does not have as unique reference value the value of $P_0$ in establishing which pixels are to be filtered

[5]D.B.Duncan, "Multiple range and multiple *f*-tests", Biometrics, vol.11, pp. 1-42, 1955.
[6]R.P.Kleihorst, "Noise filtering of image sequences", Ph.D. Thesis TU-Delft, Information Theory

together with the current pixel and which pixels are not to be filtered. Substantially, this test is based on an external measurement of the standard deviation of the noise $\sigma_n$ to test all intervals containing $P_0$, not necessarily symmetrical to it, and select the interval containing the largest number of data, that is of pixels.

The DRT has been implemented for realizing filters for digital pictures. Such filters, showing a relative insensibility to the value to be filtered $P_0$, allow to filter more effectively in rather uniform zones, where the noise is more readily detectable, though safeguarding the contours of objects and avoiding the formation of "trails".

Despite the simplicity with which the DRT may be described, it implies relevant difficulties to determine the set of data to process. In fact, the amplitude of the interval, given by the product $\sigma_n \cdot \rho_{|i'-j'|,\alpha}$, depends on many factors, such as the precision level $\alpha$ of the test, the noise level $\sigma_n$ and the number of pixels that are comprised in this range. The latter dependency, in particular, greatly complicates the algorithm, because it makes necessary the testing of a great number of sub-sets of pixels containing $P_0$, before being able to identify the sub-set containing the largest number of data.

There is a need for a filter for digital video pictures based on a filtering method that while retaining the advantages of the DRT,

- does not leave unattenuated large noise peaks, because this would gravely degrade the efficiency of the MPEG2 coding and of any other system of video compression downstream of the filter, and

- does not involve a high computational complexity, because otherwise the cost for real-time video applications would be prohibitive.

OBJECT AND SUMMARY OF THE INVENTION

It has now been found and is the object of the present patent application a new filtering method and the relative filter for digital video pictures having all the advantages of the DRT while eliminating almost completely the noise peaks and being relatively easy to implement, making it relatively inexpensive for use in real-time video applications.

More specifically, the object of the present invention consists in a method of filtering the noise of digital pictures that comprises selecting a first set of pixels constituted by a pixel to be filtered of the current picture and by a second set of pixels temporally and spatially near the pixels of the first set, calculating a certain number of extended sums of values assumed by as many pre-established weight functions of the intensities of a filtered selected video component on the first group of pixels, and calculating the intensity of the filtered selected video component of the pixel to be filtered in function of said extended sums and of the sums weighed with the weight functions of the intensities of the selected video component over the first set of pixels.

The method of the invention can be implemented even choosing the pixels of the second set of pixels exclusively from the current picture or from a preceding picture.

A simple embodiment of the method of the invention is realized making each of the pre-established weight functions specular to a respective central value calculated in function of the unfiltered selected video component in the pixel to be filtered and on the noise level.

According to a preferred embodiment of the method, the intensity of the selected filtered chosen video component of the pixel to be filtered is a weighed average with pre-established weights of the ratios among the weighed sums and the extended sums.

The method of the invention is amenable to have a hardware embodiment in the form of a noise filter for digital pictures comprising a certain number of first circuit blocks, each being input with a set of pixels composed of a pixel to be filtered of the current picture and of a second set of pixels temporally and spatially near to the pixel to be filtered, each block producing an extended sum of the values assumed by a respective pre-established weight function of intensity of a selected video component on the first set of pixels and producing the weighed sum with the respective weight function of the intensities of the selected video component on the first set of pixels, and a second circuit block, having inputs coupled to the outputs of said first circuit blocks, calculating the intensity of the filtered selected video component in the pixel to be filtered in function of said weighed sums and the extended sums.

The above described filter is preferably realized making each weight function specular to a respective central value calculated in function of the intensity of the unfiltered selected video component of the pixel to be filtered and of the noise level.

According to a preferred embodiment of the invention, the weight functions of the filter are determined in function of a signal of tail detection.

BRIEF DESCRIPTION OF THE DRAWINGS

The particular aspects and advantages of the invention will become even more evident from the description of several embodiments of the invention made with reference to the attached drawings, wherein:

**Figure 1a** shows a typical shape of the weight function of the DRT;

**Figure 1b** shows a possible shape of the weight function of the method of the invention;

**Figure 2** is a basic structure of a filter made according to the invention;

**Figure 3** depicts an example of the choice of pixels temporarily and spatially near a pixel of the current picture being filtered;

**Figure 4** is an example of a quantized weight function;

**Figure 5** depicts a basic diagram of an embodiment of the filter of the invention including a circuit for detecting trails;

**Figure 6** is a sample diagram of a circuit for detecting trails;

**Figure 7** depicts a coupling circuit of the filter of the invention to an MPEG2 encoder;

**Figure 8** depicts a coupling circuit of the filter of the invention to a motion-compensation circuit.

<u>DESCRIPTION OF SEVERAL EMBODIMENT OF THE INVENTION</u>

The main difference between the proposed method an the DRT, resides in the way the pixels to be filtered are chosen and in the operations that are made on said pixels.

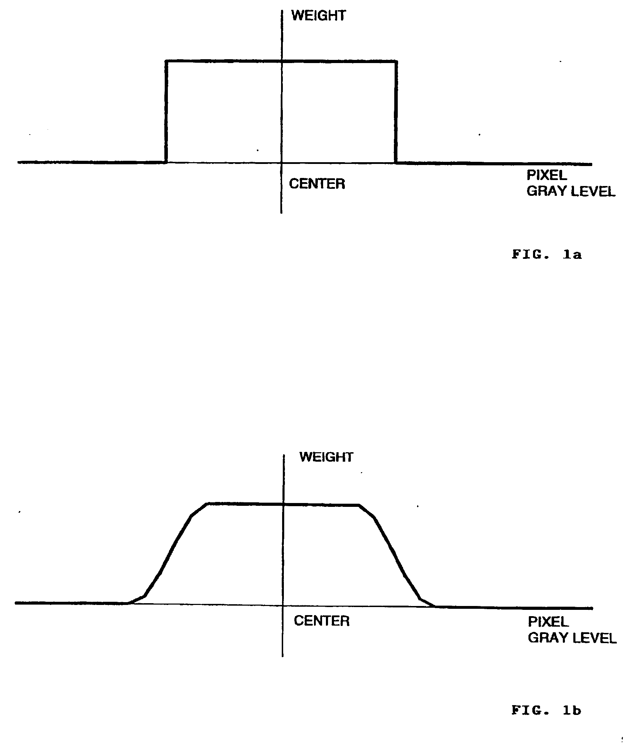

The DRT implies the choice of the largest set of pixels "similar" to the pixel to be filtered, on which the filtering operations are successively made. From a mathematical point of view, considering only the pixels of the chosen set and neglecting the others is equal to weighing with a "1" coefficient the pixels of said chosen set and with a "0" coefficient the pixels outside such a set, so weighing pixels with a "rectangular" weight function, as the one depicted in Fig. 1a.

The choice of such a weight function, although offering the possibility of effectively filtering uniform zones of pictures while safeguarding the contours of objects and so avoiding to create out of focus effects in the filtered picture, does not eliminate the nuisance represented by noise peaks.

The method of the invention overcomes the so far unresolved problems caused by large noise peaks by employing weight functions of shape as generally depicted in Fig. 1b, ideally obtained by attaching appropriate queues to the rectangular weight function of the classic DRT.

Substantially, for each available weight function $k_j$, the sum of weighs $SUMk_j$ in correspondence of the values of the intensity of the selected video component in the pixel to be filtered and in near pixels, is calculated. Once the weight function $k_M$ maximizing such a sum of weights is determined, such a function is used for the following filtering operations.

An important result is the almost complete deletion of noise peaks that the known filtering method based on the DRT left unattenuated. In fact, when a noise spike happens to be superimposed to the current pixel, because of the queues of the weight function it is possible to involve in the filtering even pixels with levels of the selected component (e.g. luminance) very different from that of the current pixel $P_0$. By elaborating such luminance levels, for example by carrying out a weighed average, it is possible to practically delete the noise pulse.

Another important difference between the method of the invention and the DRT consists in the relatively smaller number of operations that are required by the novel method of the invention, which is an essential aspect to make less expensive its use for real-time video applications.

While in the DRT the amplitude of the interval to select depends on many factors, such as the precision level $\alpha$ of the test, the number of pixels inside the interval and the standard deviation $\sigma_n$ of the superimposed noise, in the proposed method the weight functions do not depend on the number of pixels inside the interval and on the value of $\alpha$ but on the noise level NL. In this way the dependencies that made the computational complexity relatively high are practically eliminated.

Given that often the noise level can be conveniently described by its standard deviation $\sigma_n$, in the following description an embodiment of the invention referring to such a particular case will be considered, though the invention remains perfectly usable even when choosing a parameter for describing the noise level NL different from it standard deviation $\sigma_n$.

Moreover, while the DRT tests any possible interval containing $P_0$, the method of the invention contemplates the testing of only a relatively smaller number of such intervals though preserving the advantageous aspects of the DRT.

The only disadvantage of the method of the invention compared to the DRT is represented by a slight complication of the operations required for choosing the group of pixels on which to work, that is the WORKING_WINDOW, because of the presence of queues in the weight function. Nevertheless, if such a set contains a sufficiently large number of pixels, it has been observed that the filtering becomes relatively insensitive to the actual shape of the queues. Therefore, it is possible to quantize in any manner the weight function only, by assigning to it only values equal to powers of 2, thus greatly simplifying a hardware realization.

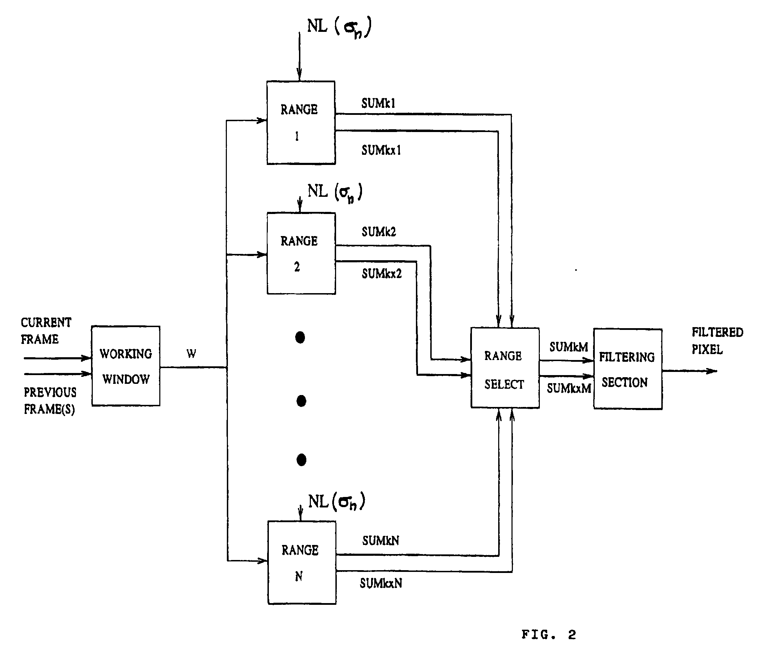

The simplest embodiment of a filter implementing the method of the invention is depicted in Fig. 2.

The block WORKING WINDOW selects the set of pixels composing the WORKING_WINDOW, comprising the pixel P to be filtered belonging to the current picture and a second set of pixels PIXEL_NEAR, temporally and spatially near P.

Such a second set, PIXEL_NEAR, can be composed of pixels belonging only to the current picture, or of pixels belonging to the current picture and of pixels belonging to preceding pictures.

The values of the pixels of the window are then input to an array of N blocks (RANGEj, where j=1,2,...,N), each block effecting the weighing of the intensity of the selected video component, according to its own weight function, in the pixels of the WORKING_WINDOW.

The blocks RANGEj may be provided with information on the noise level NL, in order to produce its own weight functions based on the noise level NL.

Such blocks output respective extended sum,

$$\mathrm{SUMk}_j = \sum_{p_i \in \mathrm{Working\_Window}} k_{ij} \; ,$$

of the

values assumed by its own weight function on the pixels of the WORKING_WINDOW and the respective weighed sum,

$$\mathrm{SUMkx}_j = \sum_{p_i \in \mathrm{Working\_Window}} k_{ij} \cdot p_i \, ,$$

of the intensity of the selected video component.

The block FILTERING SECTION provides the value of the intensity of the filtered pixel FILT.

In the mentioned figure, reference is made to a particular embodiment of the method, in which before the FILTERING SECTION there is a block, RANGE SELECT, coupled to the outputs of the N blocks RANGEj, that performs the selection of the maximum extended sum $\mathrm{SUMk}_M$ and the respective weighed sum $\mathrm{SUMkx}_M$.

One of the possibilities of implementing the block FILTERING SECTION is that of calculating a simple weighed average of pixels of the chosen interval, i.e. to make

$$\mathrm{FILT} = \mu = \frac{\displaystyle\sum_{p_i \in \mathrm{Working\_Window}} k_{ij} \cdot p_i}{\displaystyle\sum_{p_i \in \mathrm{Working\_Window}} k_{ij}}$$

In another alternative the weighed sum $\mu$ can be combined with the current pixel, for example:

$$\mathrm{FILT} = \mu + \alpha \cdot (P_0 - \mu)$$

wherein the coefficient $\alpha$ is established, for example, depending on the chosen interval for the filtering operations. Such a coefficient a can be even calculated depending on the value of the local variance $\sigma_g^2$ the picture, compared to a parameter representative of the noise level, that can be for example the noise variance $\sigma_n^2$, as in a switching filter[6]:

$$\alpha = MAX\left\{\frac{\sigma_g^2 - \sigma_n^2}{\sigma_g^2}, 0\right\}$$

Generally the FILTERING SECTION can calculate the value of FILT starting from all the values of $SUMk_j$ and $SUMkx_j$.

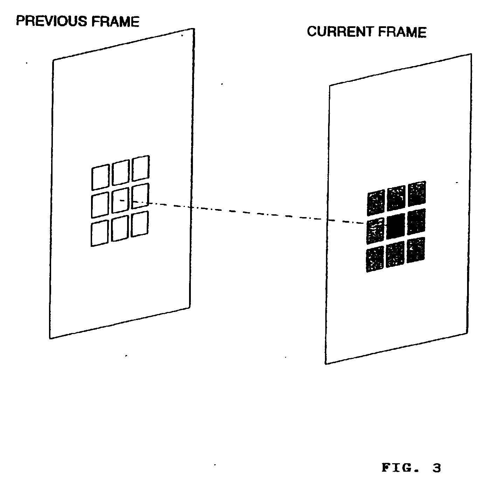

The WORKING WINDOW block defines the set of pixels, WORKING_WINDOW, that can comprise, as shown for example in Fig. 3, pixels belonging to the current picture and to a preceding picture. The latter may be the picture corrupted by noise or the filtered picture. In any case the WORKING_WINDOW can be only of spatial kind if it is not available a frame memory storing the current picture or the preceding pictures.

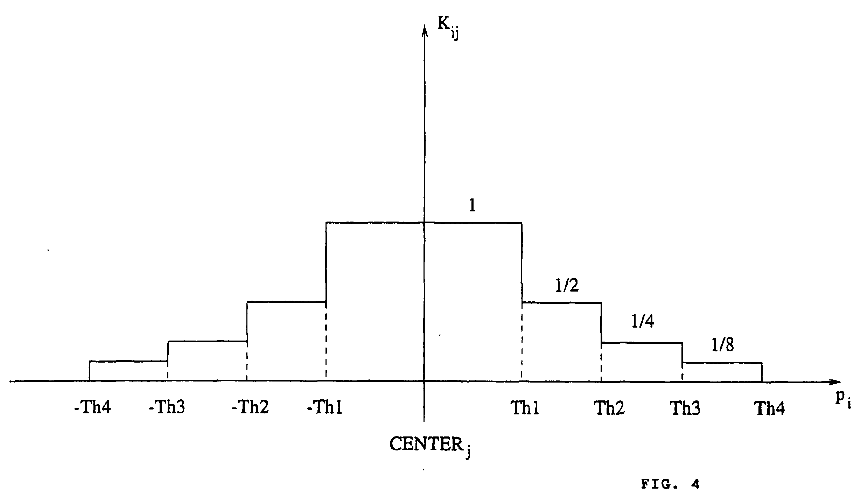

One of the possible ways of producing the different weight functions is to make them of the same shape, as exemplified in Fig. 4, and to centre them on different positions, CENTERj, for each block, RANGEj.

The set of possible values of CENTERj for the various blocks RANGEj is decided in function of the intensity of the selected video component in the pixel to be filtered, $P_0$, of the index $j$ and of the noise level NL which, according to what has been stated above, can be fully described by $\sigma_n$:

$$CENTERj = CENTER(P_0, \sigma_n, j)$$

An example of a possible choice of the values of CENTERj is given by:

$$CENTERj = P_0 + \frac{2\sigma_n}{N-1}(j-1) - \sigma_n \text{ where } j = 1,...,N$$

which produces N values of CENTERj equally spaced between $P_0 - \sigma_n$ and $P_0 + \sigma_n$.

Only by way of an example, a possible shape of a weight function is depicted in Fig. 4. The separation of the thresholds Th1, Th2, ..., ThM from CENTERj is intended as a function of $\sigma_n$. The indicated coefficients are equal to powers of 2, thus simplifying the hardware realization of the filter, but nothing forbids to give them different values in case, for example, the filter of the invention is employed in a non real-time application.

Because the filter depicted in Fig. 2 is not provided with a $\sigma_n$ estimator, in order to get an estimation of the noise level it is possible to use an automatic system, or a manual external regulation of the desired degree of filtering. In both cases it is possible to over-estimate $\sigma_n$, and so, in the case of a spatio-temporal window, to produce artifacts such as "trails" (known in literature as "comet tails" or simply as "trails").

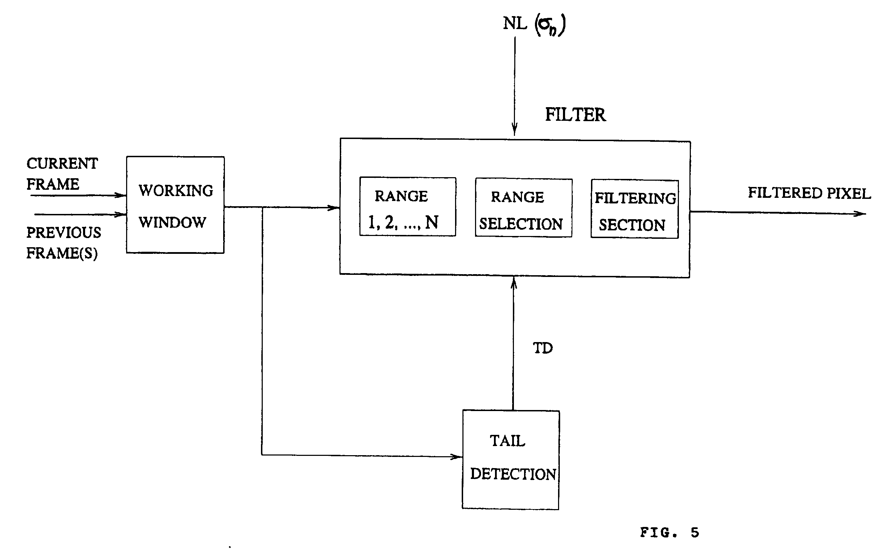

It is necessary in such cases, a circuit block for detecting an eventual generation of trails ("tails detection") in order to be able of regulating accordingly the filtering operations. A system provided with such a block of tail detection, TAIL DETECT, is depicted in Fig. 5.

As shown, the block FILTER, comprising the blocks RANGEj where j=1,2,...,N, RANGE SELECT and FILTERING SECTION, is coupled to the TAIL DETECT block that examines the pixels of the WORKING_WINDOW, eventually generating a tail detection signal TD.

In the case of tails detection, many different corrections of the problem are possible. For example, the block FILTER may disable the filtering depending on such signal TD and output the value of the current pixel $P_0$, or may perform the filtering only on pixels belonging to the current frame or, may reduce the influence of pixels of the preceding picture on the filtering process. Therefore, the block FILTER depicted in Fig. 5 may include dedicated circuits that, depending on the signal TD, generate the desired control action.

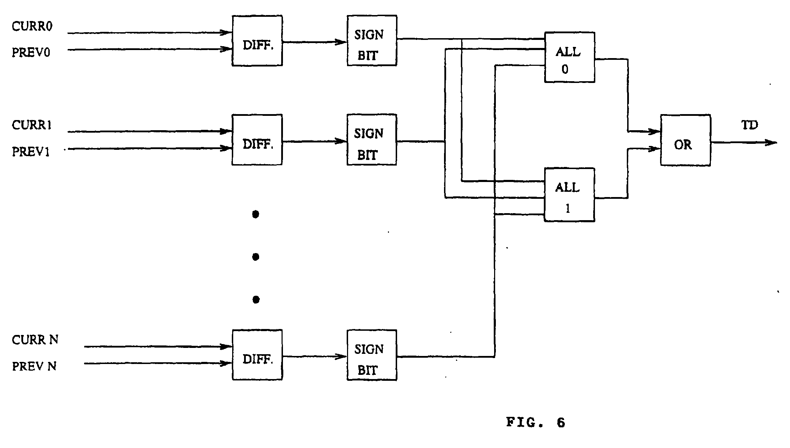

An example of how the block TAIL DETECT[7] may be implemented is depicted in Fig. 6. The difference among pixels of the current picture and the corresponding pixels of the preceding picture is carried out by the blocks DIFF. The blocks DIFF are coupled to as many blocks SIGN BIT producing the bits indicating the sign of the relative differences, which are input to the blocks ALL0 and ALL1, outputting a 1 if the bits input are all 0 or all 1, respectively. The output flag TD is produced by the logic OR of the outputs of ALL0 and ALL1.

[6]R.P.Kleinhorst, "Noise filtering of image sequences", Ph.D. Thesis TU-Delft, Information Theory

[7]S.Inamori, S.Yamauchi, K.Fukuhara, "A method of noise reduction on image processing", IEEE Transaction on Consumer Electronics, Vol.39, N.4, Nov.1993.

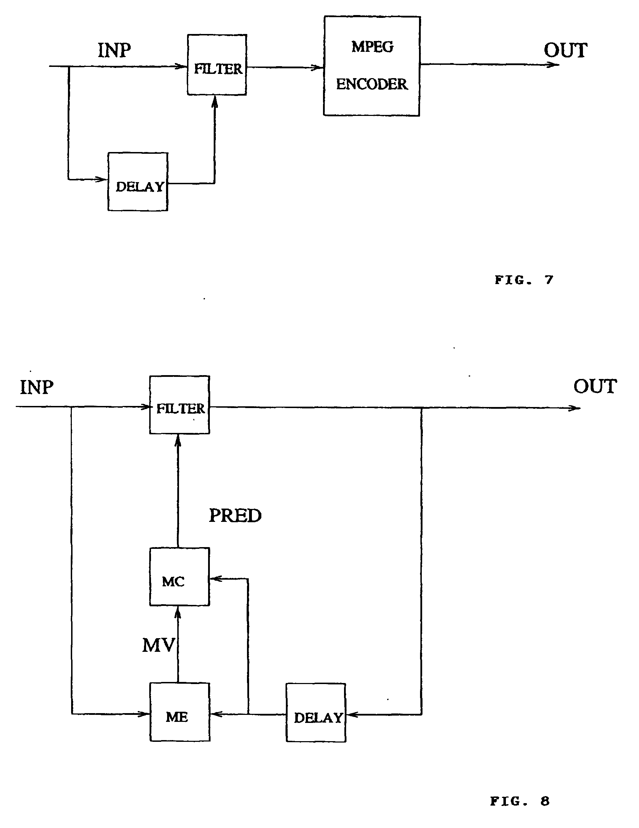

The filter can be upstream of an MPEG2 encoder, as depicted in Fig.7, or may be included in it[8].

As shown, an MPEG encoder, outputting a coded bitstream OUT, is coupled to the output of the FILTER of the invention that performs a preprocessing of the input picture INP, using delayed replicas of pictures provided by a delay block DELAY.

The MPEG encoder may include a block for motion-estimation to make a motion-compensated filtering, thus increasing the efficiency of the filtering and of the coding.

It is even possible to use a motion-compensation filter separated from an MPEG2 encoder, according to the diagram depicted in Fig. 8.

The filter of the invention FILTER receives at its input the picture to be filtered INP and a predicted picture PRED, and outputs a filtered picture OUT. The predicted picture PRED is obtained by means of the combined action of a motion-compensation block MC, a motion estimator block ME and a delay block DELAY.

The motion estimator ME produces, from the current picture INP and from replicas of previously filtered pictures OUT, suitably delayed by a delay block DELAY, the motion vectors MV that are used by the motion-compensation block MC. The motion- compensation block MC calculates a predicted picture PRED as a function of the motion vectors MV and of the delayed pictures provided by the DELAY.

Tests have confirmed that the same hardware structure used for filtering luminance is perfectly usable also for filtering chrominances. It is possible to use 3 identical filters for each of the video signals, as long as they are provided with appropriate values of respective noise levels that are generally different for the 3 video signals.

## Claims

1. A method of filtering noise of digital pictures comprising

   selecting a first set of pixels (WORKING_WINDOW) constituted by the union of a pixel of the current picture to be filtered (P) and of a second set of pixels temporally and spatially near (PIXEL_NEAR) to said pixel;

   calculating a certain number (N) of extended sums ($SUMk_j$) of values assumed by as many pre-established weight functions of the intensity of a selected video component ($k_j$) on said first set of pixels (WORKING_WINDOW).

2. The method of claim 1 wherein pixels of said second set of pixels near (PIXEL_NEAR) belong to the current picture.

3. The method of claim 1 wherein pixels of said second set of pixels near (PIXEL_NEAR) belong to a preceding picture.

4. The method according to one of preceding claims wherein said pre-established weight functions are specular to a respective central value (CENTERj) calculated in function of the unfiltered selected video component of said pixel to be filtered ($P_0$) and of the noise level (NL).

5. The method according to one of preceding claims wherein said intensity of the filtered selected video component of the filtered pixel (FILT) is a weighed average with pre-established weights of the ratios among said weighed sums ($SUMkx_j$) and said extended sums ($SUMk_j$).

6. The method of claim 5 wherein said intensity of the filtered selected video component of the filtered pixel (FILT) is the ratio ($\mu$) between a weighed sum ($SUMkx_M$) and the respective extended sum ($SUMk_M$) chosen such that the respective extended sum ($SUMk_M$) is the greatest among said extended sums ($SUMk_j$).

7. The method of claim 6 wherein the intensity of the filtered selected video component of the filtered pixel (FILT) is calculated as the sum between said ratio ($\mu$) and a coefficient which is proportional by a positive coefficient not exceeding the unity ($\alpha$) to the difference between the intensity of the chosen video component non filtered in said pixel to be filtered ($P_0$) and said ratio ($\mu$).

8. The method of claim 7 wherein said coefficient ($\alpha$) is calculated as a function of the noise variance ($\sigma_n^2$) and the local variance of the current picture ($\sigma_g^2$).

9. A noise filter for digital pictures comprising

[8] W.Brüls, R.P.Kleihorst, A. Van der Werf, patent WO 97/30545, filed 23/1/1997.

a certain number (N) of first circuit blocks (RANGEj) each receiving on an input a set of pixels (WORKING_WINDOW) constituted by a pixel to be filtered ($P_0$) of the current picture and by a second set of pixels (PIXEL_NEAR) temporally and spatially near said pixel ($P_0$), each block producing an extended sum ($SUMk_j$) of the values assumed by a respective pre-established weight function of the intensity of a selected video component ($k_j$) of said first set of pixels (WORKING_WINDOW) and producing the weighed sum with the respective weight function of the intensities of the selected video component ($SUMkx_j$) of said first set of pixels (WORKING_WINDOW),

a second circuit block (FILTERING_SECTION) coupled to the output of said first circuit blocks (RANGEj) calculating the intensity of the filtered selected video component of the filtered pixel (FILT) in function of said weighed sums ($SUMkx_j$) and of said extended sums ($SUMk_j$).

10. The filter of claim 9 wherein each of said weight functions ($k_j$) is specular to a respective central value (CENTERj) calculated in function of the intensity of the unfiltered selected video component of said pixel to be filtered ($P_0$) and of the noise level (NL).

11. The filter of claims 9 or 10 wherein said weight functions ($k_j$) are determined depending on a tail detection signal (TD).

WEIGHT

CENTER

PIXEL
GRAY LEVEL

FIG. 1a

WEIGHT

CENTER

PIXEL
GRAY LEVEL

FIG. 1b

FIG. 2

PREVIOUS FRAME

CURRENT FRAME

FIG. 3

EP 1 100 260 A1

FIG. 4

FIG. 5

FIG. 6

FIG. 7

FIG. 8

**European Patent Office**

# EUROPEAN SEARCH REPORT

Application Number

EP 99 83 0705

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 601 655 A (PHILIPS ELECTRONICS NV) 15 June 1994 (1994-06-15) * the whole document * | 1-5,9,10 | H04N5/21 H04N7/26 |
| A | HAAN DE G ET AL: "TELEVISION NOISE REDUCTION IC" IEEE TRANSACTIONS ON CONSUMER ELECTRONICS,US,IEEE INC. NEW YORK, vol. 44, no. 1, 1 February 1998 (1998-02-01), pages 143-154, XP000779261 ISSN: 0098-3063 | 1,2,4-7, 9,10 | |

TECHNICAL FIELDS
SEARCHED    (Int.Cl.7)

H04N

The present search report has been drawn up for all claims

| Place of search | Date of completion of the search | Examiner |
|---|---|---|
| THE HAGUE | 13 April 2000 | Yvonnet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 99 83 0705

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2000

| Patent document cited in search report | Publication date | Patent family member(s) | Publication date |
|---|---|---|---|
| EP 0601655 A | 15-06-1994 | JP 7046200 A | 14-02-1995 |

EPO FORM P0459

For more details about this annex : see Official Journal of the European Patent Office, No. 12/82